# EUROPEAN PATENT APPLICATION

(11) **EP 1 627 691 A1**
(43) Date of publication of application: **22.02.2006**
(21) Application number: 04019866.5
(22) Date of filing: 20.08.2004
(51) Int. Cl.: B07B 1/46, G01B 5/14

(54) **Method for measuring micro meshes**

(71) Applicant: Chen, Shi-Chiun, Taipei 108 (TW)
(72) Inventor: Chen, Shi-Chiun, Taipei 108 (TW)
(74) Representative: Casalonga, Axel

(57) **Abstract**

A method for measuring micro meshes includes steps of measuring a diameter of each micro mesh and edge distance between two adjacent micro meshes, and illustrating the measuring result with a mesh code which is defined to include a diameter code and an edge distance code. The diameter code is defmed as a first number including three Arabic numerals for indicating that the diameter of each micro mesh is a percentage of the first number (mm). The edge distance code is defined as a second number including three Arabic numerals following the diameter code for indicating that the edge distance between the two adjacent micro meshes is a percentage of the second number (mm).

## Description

The present invention relates to a method for measuring meshes, and particularly to a method for measuring micro meshes.

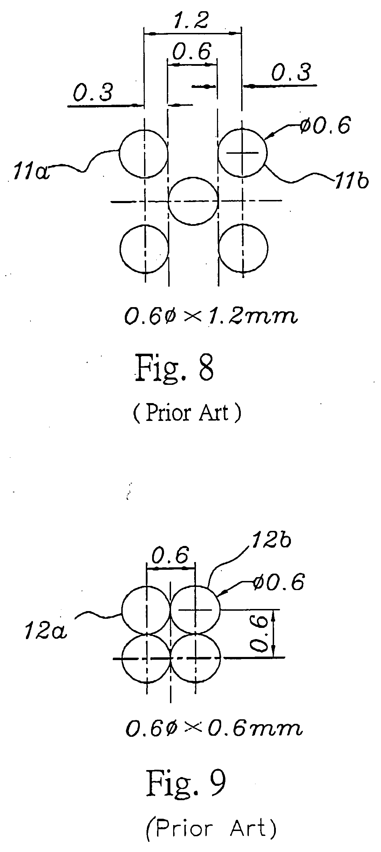

In general, a conventional method for measuring micro meshes with same diameters includes steps of measuring the diameter of each micro mesh and centre-to-centre distance between two adjacent micro meshes and illustrating the measuring result with a code name which is defined as diameter X centre-to-centre distance. As shown in Fig. 8, diameters of two adjacent meshes 11a, 11b are 0.6mm and centre-to-centre distance between the two adjacent meshes 11a, 11b is 1.2mm. Therefore, the code name for illustrating the measuring result is defined as 0.6 Φ X 1.2mm, wherein the 0.6 Φ indicates that the diameter of each mesh is 0.6mm, and the 1.2mm indicates that the centre-to-centre distance between the two adjacent meshes is 1.2mm. Similarly, when diameters of two adjacent micro meshes are 0.6mm and centre-to-centre distance between the two micro meshes is 1.0mm or 0.8mm, the code name is defined as 0.6 Φ X 1.0mm or 0.6 Φ X 0.8mm.

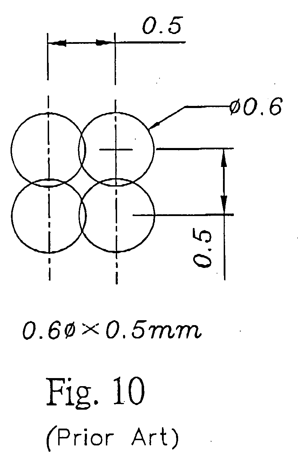

When micro meshes are defined in a board in accordance with a code name defined as 0.6 Φ × 0.6mm which means that the diameter of each micro mesh is 0.6mm and the centre-to-centrc distance between the adjacent micro meshes is 0.6mm too, as shown in Fig. 9, broken meshes occur since the diameter of the micro mesh is equal to the centre-to-centre distance between the adjacent micro meshes. Similarly, when a diameter of each micro mesh is larger than centre-to-centre distance between two adjacent micro meshes, such as 0.6 Φ X 0.5mm (see Fig. 10), 0.6 Φ X 0.4mm and so on, all the micro meshes are broken. However, when the conventional code name indicates broken meshes, the conventional code name still exists and cannot provide a warning. Therefore, the conventional code name does not facilitate to prevent from making broken meshes.

Thus, it is required to improve the conventional method for measuring micro meshes.

Accordingly, an object of the present invention is to provide a method for measuring micro meshes which includes a step of illustrating a measuring result with a mesh code for facilitating to prevent from making broken meshes.

Another object of the present invention is to provide a method for measuring micro meshes which includes a step of illustrating a measuring result with a mesh code for providing more information for facilitating to make the micro meshes.

To achieve the above-mentioned objects, a method for measuring micro meshes in accordance with the present invention includes steps of measuring a diameter of each micro mesh and edge distance between two adjacent micro meshes, and illustrating the measuring result with a mesh code which is defined to include a diameter code and an edge distance code. The diameter code is defined as a first number including three Arabic numerals for indicating that the diameter of each micro mesh is a percentage of the first number (mm). The edge distance code is defined as a second number including three Arabic numerals following the diameter code for indicating that the edge distance between the two adjacent micro meshes is a percentage of the second number (mm).

Other objects, advantages and novel features of the present invention will be drawn from the following detailed embodiments of the present invention with attached drawings, in which:

Fig. 1 is a schematic view of a mesh code in accordance with a first embodiment of the present invention;

Fig. 2 is a schematic view showing a method for measuring micro meshes in accordance with the first embodiment of the present invention;

Fig. 3 is a schematic view of a mesh code in accordance with a second embodiment of the present invention;

Fig. 4 is a schematic view showing a method for measuring micro meshes in accordance with the second embodiment of the present invention;

Fig. 5 is similar to Fig. 4 but showing more micro meshes;

Fig. 6 is a schematic view of a mesh code in accordance with a third embodiment of the present invention;

Fig. 7 is a schematic view showing a method for measuring micro meshes in accordance with the third embodiment of the present invention;

Fig. 8 is a schematic view showing a conventional method for measuring micro meshes with a first code name;

Fig. 9 is a schematic view showing a conventional method for measuring micro meshes with a second code name; and

Fig. 10 is a schematic view showing a conventional method for measuring micro meshes with a third code name.

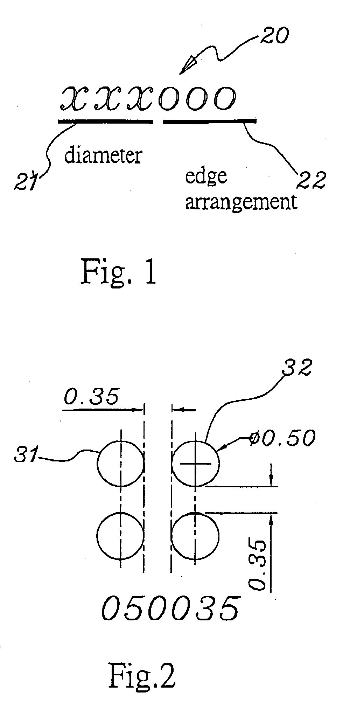

Referring to Figs. 1 and 2, a method for measuring micro meshes of the present invention includes steps of measuring a diameter of each micro mesh and edge distance between two adjacent micro meshes and illustrating the measuring result with a mesh code 20 which is defined to include a diameter code 21 and an edge distance code 22. The diameter code 21 is defined as a first number including three Arabic numerals for indicating that the diameter of each micro mesh is a percentage of the first number (mm). The edge distance code 22 is defined as a second number including three Arabic numerals following the diameter code 21 for indicating that the edge distance between two adjacent micro meshes is a percentage of the second number (mm). For example, as shown in Fig..2, a mesh code in accordance with a first embodiment of the present invention is defined as 050035, wherein the 050 indicates that the diameters of the micro meshes 31, 32 are both 0.5mm and the 035 indicates that the edge distance between the adjacent micro meshes 31, 32 is 0.35mm.

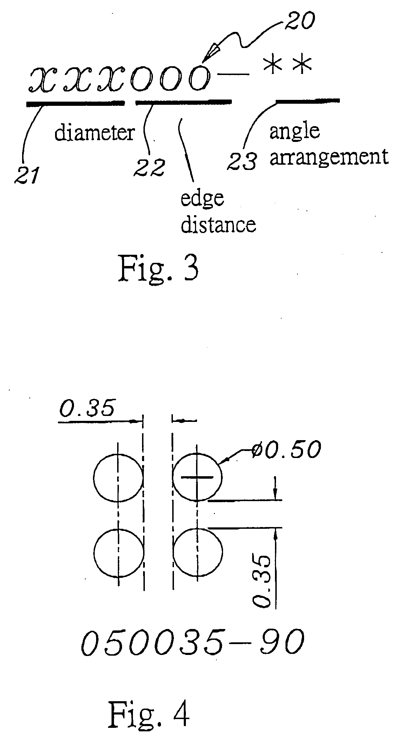

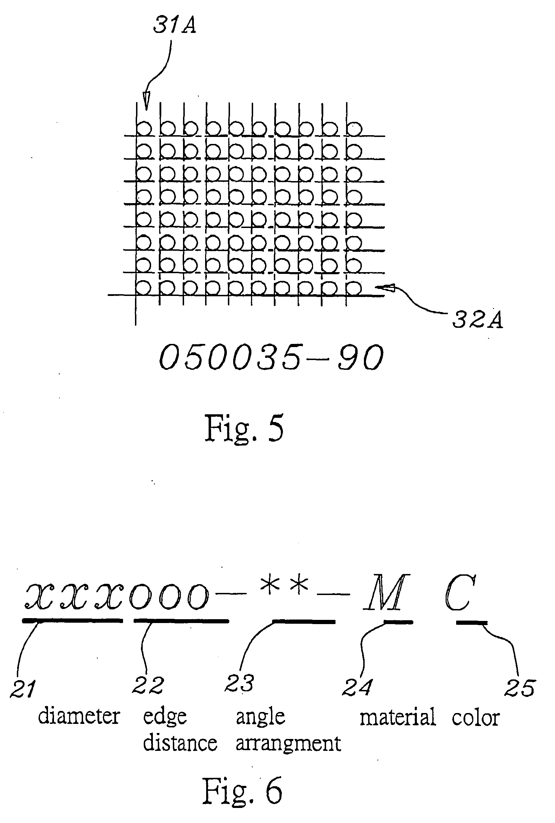

Referring to Figs. 3-5, a mesh code in accordance with a second embodiment of the present invention further includes an angle arrangement code 23. The angle arrangement code 23 follows the edge distance code 22 with a dash being defined therebetween. The angle arrangement code 23 is defined as a third number including two Arabic numerals for indicating that an angle defined between longitudinal and lateral micro mesh groups is the third number (degrees). For example, as shown in Figs. 4 and 5, the mesh code 20 is defined as 050035-90, wherein the 90 indicates that an angle defined between a longitudinal micro mesh group 31A and a lateral micro mesh group 32A is 90 degrees.

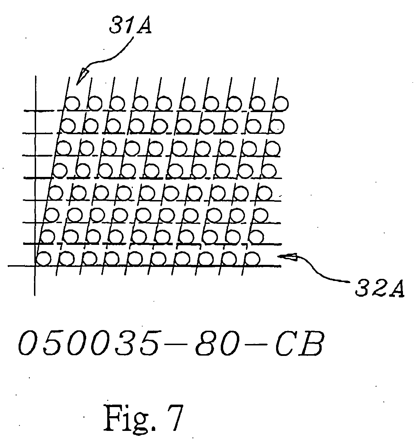

Referring to Figs. 6 and 7, a mesh code 20 in accordance with a third embodiment of the present invention further includes a material code 24 and a color code 25. The material code 24 and the color code 25 follow the angle arrangement code 23 in turn with a dash being defined between the material code 24 and the angle arrangement code 23. The material code 24 is defined as a first word which is generally an abbreviation of a material name for indicating the material of a board defined with the micro meshes. For example, C indicates Poly Carbonate (PC), S indicates Polystyrene (PS), P indicates Poly Propylene (PP), ALU indicates Aluminum, and so on. The color code 25 follows the material code 24. The color code 25 is defined as a second word which is generally the first letter of color for indicating the color of the board, For example, B indicates Black, W indicates White, and so on. Referring to Fig. 7, the mesh code 20 is defined as 050035-80-CB which indicates that the diameter of each micro mesh is 0.5mm, the edge distance between the adjacent micro meshes is 0.35mm, the angle defined between a longitudinal micro mesh group and a lateral micro mesh group is 80 degrees, the material is Poly Carbonate (PC), and the color is black. For another example, a mesh code is defined as 050035―80―SW wherein the SW indicates that the board is made from Polystyrene (PS) and is white.

Of causc, the color code 25 may be omitted when the color of the material is specific. For example, a mesh code may be defined as 050035 ―70―ALU which indicates that the material is Aluminum whose color is specific and so the color code 25 is omitted.

Since broken meshes cannot be measured by the method of the present invention, the method for measuring micro meshes of the present invention can facilitate to prevent from making broken meshes. Furthermore, since the mesh code includes a diameter code, an edge distance code, an angle arrangement code, a material code, and a color code, the method for measuring micro meshes of the present invention provides more information for facilitating to make the micro meshes.

It is understood that the invention may be embodied in other forms without departing from the spirit thereof. Thus, the present examples and embodiments are to be considered in all respects as illustrative and not restrictive, and the invention is not to be limited to the details given herein.

## Claims

1. A method for measuring micro meshes comprising the following steps:
measuring a diameter of each micro mesh and edge distance between two adjacent micro meshes; and
illustrating the measuring result with a mesh code which is defined to comprise a diameter code and an edge distance code.

2. The method for measuring micro meshes as claimed in claim 1, wherein the diameter code is defined as a first number including three Arabic numerals for indicating that the diameter of each micro mesh is a percentage of the first number (mm).

3. The method for measuring micro meshes as claimed in claim 1, wherein the edge distance code is defined as a second number including three Arabic numerals following the diameter code for indicating that the edge distance between the two adjacent micro meshes is a percentage of the second number (mm).

4. The method for measuring micro meshes as claimed in claim 1, wherein the mesh code comprises an angle arrangement code following the edge distance code of the mesh code.

5. The method for measuring micro meshes as claimed in claim 4, wherein a dash is defined between the angle arrangement code and the edge distance code.

6. The method for measuring micro meshes as claimed in claim 4, wherein the angle arrangement code is defined as a third number including two Arabic numerals for indicating that an angle defined between longitudinal and lateral micro mesh groups is the third number (degrees).

7. The method for measuring micro meshes as claimed in claim 4, wherein the mesh code comprises a material code following the angle arrangement code.

8. The method for measuring micro meshes as claimed in claim 7, wherein a dash is defined between the material code and the angle arrangement code.

9. The method for measuring micro meshes as claimed in claim 7, wherein the material code is defined as a first word which is generally an abbreviation of a material name for indicating the material of a board defined with the micro meshes.

10. The method for measuring micro meshes as claimed in claim 7, wherein the mesh code comprises a color code following the material code.

11. The method for measuring micro meshes as claimed in claim 10, wherein the color code is defined as a second word which is generally the first letter of color for indicating the color of a board defined with the micro meshes.

12. A method for measuring micro meshes comprising a step of illustrating a measuring result with a mesh code which is defined to comprise a diameter code and an edge distance code.

13. The method for measuring micro meshes as claimed in claim 12, wherein the diameter code is defined as a first number including three Arabic numerals for indicating that a diameter of each micro mesh is a percentage of the first number (mm), and the edge distance code is defined as a second number including three Arabic numerals following the diameter code for indicating that edge distance between two adjacent micro meshes
